(19) Europäisches Patentamt
European Patent Office
Office européen des brevets

(11) **EP 2 424 017 A2**

(12) **EUROPEAN PATENT APPLICATION**

(43) Date of publication:
**29.02.2012 Bulletin 2012/09**

(51) Int Cl.:
*H01M 6/36* (2006.01)    *H01M 10/39* (2006.01)

(21) Application number: **11179282.6**

(22) Date of filing: **30.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2010 KR 20100084891**

(71) Applicant: **Samsung SDI Co., Ltd.**
**Yongin-si, Gyeonggi-do (KR)**

(72) Inventors:
 • **Chung, Byung-Joo**
  **Gyeonggi-do (KR)**
 • **Kim, Tae-Yoon**
  **Gyeonggi-do (KR)**
 • **Kim, Ju-Yong**
  **Gyeonggi-do (KR)**

(74) Representative: **Walaski, Jan Filip**
 **Venner Shipley LLP**
 **200 Aldersgate**
 **London**
 **EC1A 4HD (GB)**

(54) **Solid electrolyte and thermoelectric converter including the same**

(57)    A solid electrolyte and a thermoelectric converter including the same. A solid electrolyte includes a non-porous layer and a first porous layer on a first surface of the non-porous layer.

FIG. 1A

porous layer

non-porous layer

# FIG. 1B

porous layer

non-porous layer

porous layer

**Description**

This disclosure relates to a solid electrolyte and a thermoelectric converter including the same.

The increasing importance of energy usage has led to more attention being paid to how waste energy is recycled. According to currently available waste heat recovery techniques, waste heat is collected in the form of heated water or combustion exhaust or vapour by using a heat exchanger or a waste heat boiler. Examples of available heat sources include various types of industrial waste heat, reaction heat from a nuclear reactor, solar heat, ground heat, fossil energy, etc. However, the currently available waste heat recovery techniques appear to have reached their technical and economical limitations.

Most waste heat recovery plants are large and thus, their installation has many requirements. Also, large-capacity heat exchangers for industrial or power generation purposes are generally imported from other countries, thus requiring a high investment cost. Accordingly, plans need to be prepared well in advance, and even after the installation, maintenance needs to be regularly performed. Meanwhile, generally, when electricity is generated from waste heat surrounding supply facilities, such as vapour generation facilities, turbines, or compressors, are needed. Accordingly, the technical validity and economic efficiency of waste heat recovery systems should be evaluated, and in particular, how the waste heat recovery systems use generated electricity should be evaluated.

An alkali metal thermal to electric converter (AMTEC), unlike conventional power generation methods, includes power generation cells in which electricity is generated at an electric heating surface where heat is exchanged without using a turbine or a boiler. That is, electricity is generated directly at a portion that contacts heat. Such unit cells may also be modularized by being connected in series or parallel, thereby enabling production of a few kW to hundreds of MW of capacity. The AMTEC can be easily used together with a conventional system.

An aspect of an embodiment of the present invention is directed toward a solid electrolyte having a large three phase boundary area in which electrochemical activity occurs.

An aspect of an embodiment of the present invention is directed toward a thermoelectric converter including the solid electrolyte.

Additional aspects of embodiments of the present invention will be set forth in the description which follows, and will be apparent from the description, or may be learned by practice of the presented embodiments.

According to one or more embodiments of the present invention, the solid electrolyte includes a non-porous layer and a first porous layer formed on a first surface of the non-porous layer.

According to one or more embodiments of the present invention, the solid electrolyte includes a second porous layer on a second surface of the non-porous layer.

According to one or more embodiments of the present invention, a thickness of the non-porous layer is about 0.1 mm to about 3 mm.

According to one or more embodiments of the present invention, a thickness of the first non-porous layer and/or the second porous layer is about 0.05 mm to 3 mm.

According to one or more embodiments of the present invention, a density of the first non-porous layer and/or the second porous layer is about 1.0 g/cm$^3$ to about 3.0 g/cm$^3$.

According to one or more embodiments of the present invention, the first non-porous layer and/or the second non-porous layer includes β alumina or β" alumina. According to one or more embodiments of the present invention, an interior of the first non-porous layer and/or the second porous layer is coated with electrode particles.

According to one or more embodiments of the present invention, an interior of the first non-porous layer and/or the second porous layer is coated with electrode particles selected from TiN, TiC, RhW, Rh$_2$W, and mixtures thereof.

According to one or more embodiments of the present invention, a thermoelectric converter includes a case having a first end and a second end; an actuating fluid inside the case; a solid electrolyte dividing an interior of the case; a first electrode; a second electrode, the solid electrolyte being between the first electrode and the second electrode; and a heat source for heating the first end or second end. The solid electrolyte includes a non-porous layer and a first porous layer on a first surface of the non-porous layer. The thermoelectric converter may further include a second porous layer on the second surface of the non-porous layer.

According to one or more embodiments of the present invention, the thermoelectric converter includes a power generation unit, wherein the unit is electrically connected to the first electrode and the second electrode.

According to one or more embodiments of the present invention, the solid electrolyte divides an interior of the case into a first space and a second space, and the first space corresponds to the first end and the second space corresponds to the second end. The thermoelectric converter may further includes a transfer unit connecting the first space and the second space.

The thermoelectric converter may further include a transportation driving unit transporting the actuating fluid from any one space of the first space and the second space to the other space of the first space and the second space by connecting the first space and the second space.

According to one or more embodiments of the present invention, the actuating fluid may be an alkaline metal.

The actuating fluid may be sodium.

According to one or more embodiments of the present invention, the first electrode includes an electrode and a first current collector; and the second electrode includes an electrode and a second current collector.

According to one or more embodiments of the present invention, the first electrode and the second electrode include a material selected from TiN, TiC, RhW, Rh2W, and mixtures thereof.

According to one or more embodiments of the present invention, the first current collector and the second current collector include molybdenum (Mo).

These and/or other aspects will become apparent and more readily appreciated from the following description of the embodiments, taken in conjunction with the accompanying drawings of which:

FIG. 1A is a schematic conceptual view of a solid electrolyte according to an embodiment of the present invention;
FIG. 1B is a schematic conceptual view of a solid electrolyte according to another embodiment of the present invention;
FIG. 2 is a schematic conceptual view of a solid electrolyte including a porous layer having an interior coated with electrode particles, according to an embodiment of the present invention;
FIG. 3 is a schematic conceptual view of a thermoelectric converter according to an embodiment of the present invention;
FIG. 4 is a schematic conceptual view of a thermoelectric converter according to another embodiment of the present invention;
FIG. 5 is a schematic perspective view illustrating an assembly including a first electrode, a solid electrolyte, and a second electrode;
FIG. 6 is a schematic perspective view of a thermoelectric converter according to an embodiment of the present invention;
FIG. 7 is a schematic cross-sectional view taken along a line IV-IV' of FIG. 6;
FIG. 8 is an enlarged view (x 10,000) of a surface of a $\beta$ alumina substrate used in Example 1; and
FIG. 9 is an enlarged view (x 10,000) of a surface of a $\beta$ alumina layer coated with electrode particles according to an embodiment of the present invention.

A conventional alkali metal thermoelectric converter (AMTEC) cell includes a non-porous $\beta$ alumina electrolyte support having surfaces coated with electrode materials to form porous cathode and anode layers. In a cell having such a structure, electricity is generated by an electrochemical oxidation-reduction reaction of Na at a cathode and an anode. The electrochemical reaction occurs only at a three phase boundary (solid electrolyte-electrode-pore) of each of the cathode and the anode. Accordingly, if the three phase boundary area is widened, more electric energy may be generated and thus, the energy efficiency of an AMTEC cell may be increased.

As described above, in a conventional AMTEC cell, a three phase boundary is present only at an interface between a non-porous solid electrolyte membrane and electrode particles. Accordingly, a conventional electrode structure is limited due to the size of the electrochemically active three phase boundary area. That is, electrode materials located in places other than the interface between the non-porous solid electrolyte and the electrode may only function as an electrochemically inactive and electrically conductive layer, and thus, electrode materials located outside the interface have limited usefulness.

However, the above described limitation may be overcome by forming a porous electrolyte membrane on the non-porous electrolyte membrane.

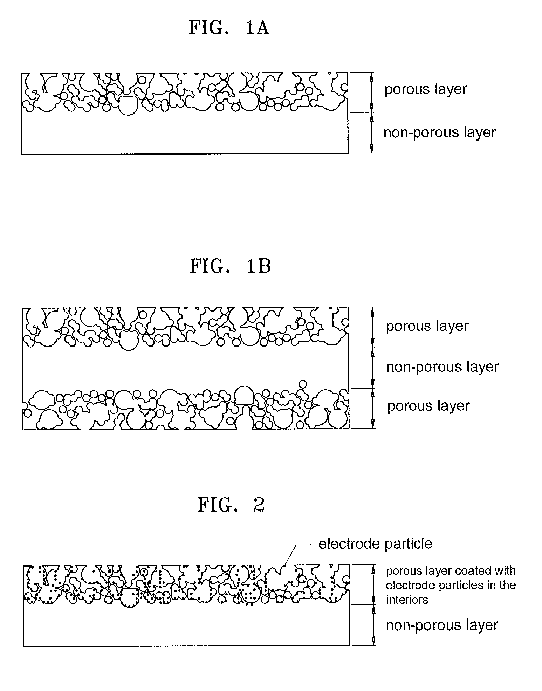

FIG. 1A is a schematic conceptual view of a solid electrolyte according to an embodiment of the present invention. Referring to FIG. 1A, the solid electrolyte according to the present embodiment includes a non-porous layer and a first porous layer formed on a surface of the non-porous layer.

According to another embodiment of the present invention, a second porous layer may be further formed on another surface of the non-porous layer. A solid electrolyte having such a structure is illustrated in FIG. 1B.

An example of a method of forming a solid electrolyte having such a structure will now be described in more detail.

First, a non-porous solid electrolyte layer is formed by using $\beta$ alumina, for example, as a material for forming the solid electrolyte.

Then, $\beta$ alumina or another material for forming the solid electrolyte is mixed with a pore forming agent to prepare slurry, and the slurry is coated and dried to form a green sheet (e.g., an unsintered porous $\beta$ alumina sheet).

In preparing the slurry, a material powder for forming the solid electrolyte (e.g., $\beta$ alumina), a surfactant, a binder, and a pore forming agent may be mixed at a weight ratio of 40 to 90 : 0 to 1 : 5 to 20 : 5 to 25. When the above materials are included at the above weight ratio ranges, viscosity of the slurry may be maintained at an appropriate level, and the slurry may be easily used for a coating process. A coating process, such as screen printing, may be used.

The pore forming agent may be any one of various materials that are used to form bubbles. Non-limiting examples of the bubble forming agent are graphite, polystyrene, polymethyl methacrylate (PMMA), $SiO_2$, and carbon

nanotubes (CNT). One or more combinations of pore forming agents may be used.

The binder (e.g., a binding resin) may be any one of various organic copolymers that have appropriate viscosity and bind to β alumina. Non-limiting examples of the binder include acryl copolymers, which generally may be completely removed at 500 ˚C or lower. Acryl copolymers may have a weight average molecular weight of, for example, 1,000 to 150,000.

Non-limiting examples of the organic solvent used in preparing the slurry include toluene, IPA (isopropanol), xylene, ethylene glycol monobutyl ether, diethylketone, methylbutylketone, dipropylketone, cyclohexanone, n-pentanol, 4-methyl-2-pentanol, cyclohexanol, diacetone alcohol, ethylene glycol monomethyl ether, ethylene glycol monoethyl ether, ethylene glycol monobutyl ether, propylene glycol monomethyl ether, propylene glycol monoethyl ether, acetic acid n-butyl ester, amyl acetate, lactic acid ethyl ester, lactic acid n-butyl ester, 2-methoxyethyl acetate (e.g., methyl Cellosolve® acetate (Cellosolve is a trademark owned by Union Carbide Co., Houston, TX), 2-ethyoxyethyl acetate (e.g. ethyl Cellosolve® acetate), propylene glycol monomethyl ether acetate, and ethyl-3-ethoxypropionate. The organic solvent may have a boiling temperature of 100 to 200 ˚C.

A final viscosity of the slurry (i.e., a viscosity of the slurry prior to pasting) may be 5,000 to 100,000 cP, and the slurry may not be thixotropic. When the slurry is thixotropic, coating to form a green sheet may be difficult or may not be possible.

The coating may be performed using a roll coater, a blade coater, a curtain coater, a wire coater, or any other suitable coating method. In addition, the slurry may be directly coated by, for example, screen printing. After coating, the slurry may be dried at a temperature of about 60˚C to about 180˚C for about 10 to about 30 minutes to evaporate the solvent, thereby forming a green sheet (e.g., an unsintered printed ceramic film).

A transfer film may be made of polyethylene terephthalate, polyethylene, polypropylene, polystyrene, polyimide, polyvinylalcohol, polyvinylchloride, polyfluoroethylene, polyamide, or cellulose. The transfer film may be a resin film having heat resistance and solvent resistance. The green sheet may be formed by coating the slurry on the transfer film.

The non-porous solid electrolyte layer, and the green sheet (which includes the pore forming agent) are attached to each other, for example, by using a laminator at a temperature of about 50 ˚C to about 180 ˚C and under a pressure of about 0.1 to about 0.5 tons and at a speed of 10 mm/sec. The resultant structure is then sintered to form the solid electrolyte illustrated in FIG. 1A. During the sintering, the pore forming agent of the green sheet may decompose.

When a porous layer (for example, a β alumina layer) is formed on a non-porous solid electrolyte layer (for example, a β alumina layer) by using a screen printer, only the sintering process is required after the drying (i.e., lamination may not be necessary), and the porous layer is directly formed on the non-porous solid electrolyte layer (i.e., the transfer layer may not be required).

The structure illustrated in FIG. 1B may be obtained by attaching two green sheets (either via screen printing or transfer layers and lamination) to the respective surfaces of the non-porous electrolyte layer and sintering the resultant structure.

According to an embodiment of the present invention, a thickness of the non-porous layer may be about 0.1 mm to about 3 mm, and a thickness of the first porous layer, the second porous layer, or each of the first porous layer and the second porous layer may be about 0.05 mm to about 3 mm.

When the thicknesses of the non-porous layer, the first porous layer, and the second porous layer are within the ranges described above, the three phase boundary area is high and the solid electrolyte may have sustainable support strength.

According to an embodiment of the present invention, a density of the first porous layer, the second porous layer, or each of the first porous layer and the second porous layer may be about 1.0 $g/cm^3$ to about 3.0 $g/cm^3$. In one embodiment, when the density of the first porous layer or the second porous layer is less than 1.0, the strength of the first porous layer or the second porous layer is not appropriate for supporting after sintering. On the other hand, when the density of the first porous layer or the second porous layer is greater than 3.0, the first porous layer or the second porous layer has properties similar to that of a non-porous layer rather than properties of a porous layer.

According to an embodiment of the present invention, each of the non-porous layer, the first porous layer, and the second porous layer may be formed of β alumina or β" alumina. However, the materials for forming the non-porous layer, the first porous layer, and the second porous layer are not limited thereto, and any suitable materials may be used.

FIG. 2 is a schematic conceptual view of a solid electrolyte including a porous layer coated with electrode particles, according to an embodiment of the present invention.

Referring to FIG. 2, the porous layer may have an interior coated with electrode particles. The electrode particles may be formed of TiN, TiC, RhW, and/or $Rh_2W$. That is, the porous layer of the solid electrolyte may be coated with electrode particles and the porous layer may contact an electrode. Accordingly, a surface area of the electrode is increased.

A material for forming the electrode particles in the porous layer may be the same or different from a material for forming the electrode contacting the porous layer.

A thermoelectric converter according to an embodiment of the present invention includes a case including a first end and a second end, an actuating fluid placed inside the case, a solid electrolyte dividing an interior of the case, a first electrode disposed on a surface of the solid electrolyte, a second electrode disposed on another surface of the solid electrolyte, and a heat source for heating the first or second end, wherein the solid electrolyte includes a non-porous layer and a first porous layer formed on a surface of the non-porous layer.

According to another embodiment of the present invention, the solid electrolyte may further include a second porous layer disposed on another surface of the non-porous layer.

The solid electrolyte included in the thermoelectric converter has already been described above and thus, will not be described again here.

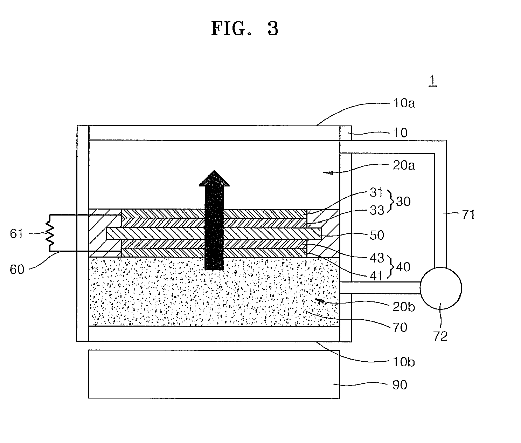

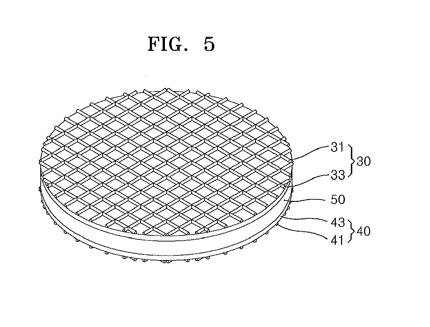

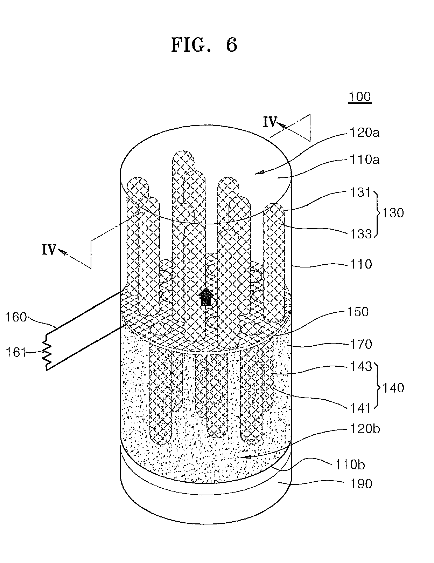

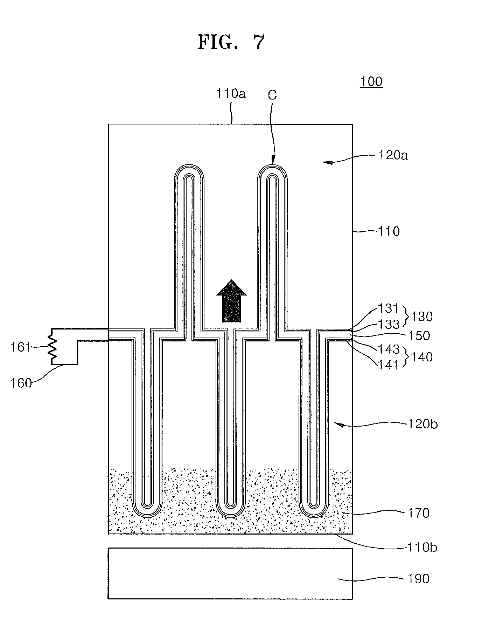

The thermoelectric converter will be described with reference to FIGS. 3 and 5. A detailed structure of the thermoelectric converter will be described with reference to FIGS. 6 and 7.

FIG. 3 is a schematic conceptual view of a thermoelectric converter 1 according to an embodiment of the present invention. FIG. 5 is a schematic perspective view illustrating an assembly including a first electrode 30, a second electrode 40, and a solid electrolyte 50.

Referring to FIG. 3, the thermoelectric converter 1 may include a case 10, a first electrode 30, a second electrode 40, a solid electrolyte 50, an actuating fluid 70, a heat source 90, and a transportation driving unit 72. The case 10 may include a first end 10a and a second end 10b. In the case 10, one of the first end 10a and the second end 10b may be a high temperature portion and the other end may be a low temperature portion. The case 10 may be filled with actuating fluid 70. The actuating fluid 70 may be an alkali metal, for example, sodium (Na). The actuating fluid 70 may also be, for example, lithium (Li), potassium (K), rubidium (Rb), and/or caesium (Cs).

An interior of the case 10 is divided into a first space 20a and a second space 20b by the solid electrolyte 50. The first space 20a may correspond to the first end 10a and the second space 20b may correspond to the second end 10b. Accordingly, if the first end 10a or the second end 10b is the high temperature portion, the corresponding first space 20a or second space 20b may have a higher temperature than the other space. The solid electrolyte 50 may include $\beta$ alumina ($\beta$-Na$_2$0•11Al$_2$O$_3$) or $\beta$" alumina ($\beta$"-Al$_2$O$_3$).

Referring to FIG. 5, the first electrode 30 may be disposed on a surface of the solid electrolyte 50, and the second electrode 40 may be disposed on another surface of the solid electrolyte 50. The first electrode 30 may include a first electrode 33 and a first current collector 31. The second electrode 40 may include a second electrode 43 and a second current collector 41. At least one of the first electrode 33 and the second electrode 43 may have a porous surface to increase surface area, thereby allowing the actuating fluid 70 (including, e.g., an alkali metal) to easily move. The first electrode 33 and the second electrode 43 may donate electrons to or accept electrons from the actuating fluid 70. The first current collector 31 and the second current collector 41 may deliver the electrons accepted by the first electrode 33 or/and second electrode 43 to an external circuit or may be provided with electrons from the external circuit. At least one of the first current collector 31 and the second current collector 41 may have a net-like structure. Each of the first electrode 33 and the second electrode 43 may include TiN, TiC, RhW, and/or Rh$_2$W. However, any material suitable for forming the first electrode 33 and/or the second electrode 43 may be used. The first current collector 31 and the second current collector 41 may include molybdenum (Mo). However, any material suitable for forming the first current collector 31 and/or the second current collector 41 may be used.

A method of operating the first electrode 30, the second electrode 40, and the solid electrolyte 50 will now be described in more detail. The solid electrolyte 50 may conduct alkali metal ions and may function as an insulator against electrons. For example, referring to FIG. 3, the second end 10b is heated by the heat source 90 and thus the second space 20b may be a high temperature area. The first end 10a is cooled (or at least not heated) and thus the first space 20a may be a low temperature area. The actuating fluid 70 in the second space 20b donates electrons to the second electrode 43, and thus, is ionized. The ionized actuating fluid 70 flows from the second space 20b to the first space 20a through the solid electrolyte 50 due to the density or pressure difference of the actuating fluid 70 in the first space 20a and in the second space 20b. Electrons accepted by the second electrode 43 from the actuating fluid 70 move toward the second current collector 41, pass through a power generation unit 60 and an external resistor 61, and arrive at the first current collector 31. The first electrode 33 accepts electrons from the first current collector 31 and donates the electrons to the ionized actuating fluid 70 that has passed through the solid electrolyte 50, thereby neutralizing the actuating fluid 70. The higher the density difference of the actuating fluid 70 in the first space 20a and in the second space 20b, the higher the temperature difference $\Delta T$ between the first end 10a and the second end 10b. The density difference is used as a driving force for moving the actuating fluid 70. That is, if the temperature difference $\Delta T$ between the first end 10a and the second end 10b is high, the vapour pressure difference between the first space 20a and the second space 20b is high, and thus the actuating fluid 70 actively flows, thereby generating more electricity.

As stated above, the actuating fluid 70 may be, for example, sodium. If sodium is used as the actuating fluid 70, liquid Na in the second space 20b, which as illustrated in FIG. 3 is a high temperature area, may be heated to a temperature of about 800 K to about 1200 K. Within this temperature range, the vapour pressure of sodium may be about $1.1 \times 10^3$ Pa to about $1.56 \times 10^5$ Pa. When $\beta$" alumina ($\beta$"-Al$_2$O$_3$) is used as the solid electrolyte 50, a sodium ion (Na+) that has passed through the solid electrolyte 50 is neutralized by accepting an electron from the first electrode 30. Once neutralized, the sodium evaporates into a vacuum in the first space 20a and then is condensed in the low temperature area of the first space 20a, which has a temperature of about 400K to about 700K. The first space 20a may contain a condenser to condense the Na vapour into liquid Na between a vacuum area of the first space 20a and low temperature area of the first space 20a. The low temperature area may be cooled by using an air cooling system and/or a water cooling system. The vapour pressure of sodium may be about $3.8 \times 10^{-4}$ Pa to about $1.3 \times 10^{2}$ Pa in the low temperature area of the first space 20a.

In general the voltage and current of a thermoelectric converter may be evaluated by examining the concentration difference in chemical potential according to the Nernst equation. An output voltage at ends of a cell may be calculated by using Equation 1.

Equation 1

$$V = \frac{RT_h}{F} \ln \left[ \frac{P_h}{\left(\frac{T_h}{T_l}\right)^{1/2} P_l + (2\pi MRT_h)^{1/2}(i/F)} \right] - iR_0$$

In Equation 1, $P_h$ is a pressure of the high-temperature area, $T_h$ is the temperature of the high-temperature area, $P_1$ is the pressure at the condensation surface (in the low-temperature area), $T_1$ is a temperature at the condensation surface (in the low-temperature area), R is the gas constant, F is the Faraday constant, M is the atomic weight of the actuating fluid (e.g., sodium), i is the current density, and $R_0$ is the interior resistance in a unit area. Using Equation 1, performance of the thermoelectric converter 1 may be determined by measuring the temperature difference between the first end 10a and the second end 10b of the case 10 and the pressure difference between the first end 10a and the second end 10b of the case 10.

The transportation driving unit 72 may be, for example, a pump. The pump may connect the first space 20a to the second space 20b through a connection channel 71. For example, the pump may transfer the actuating fluid that is condensed at the low temperature area to the high temperature area, thereby enabling continuous power generation. The pump may enable the actuating fluid 70 to flow toward the first space 20a or the second space 20b. That is, the pump may enable the actuating fluid 70 to flow from the first space 20a to the second space 20b, or from the second space 20b to the first space 20a.

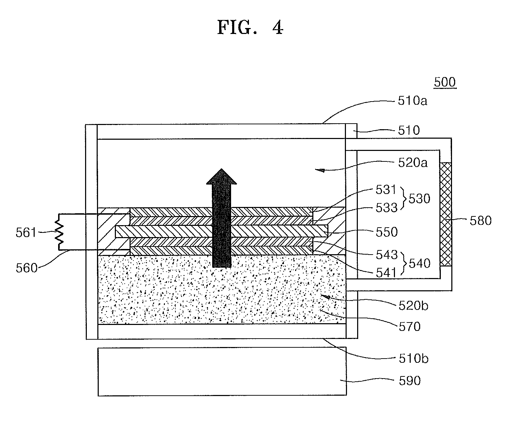

FIG. 4 is a schematic conceptual view of a thermoelectric converter 500 according to another embodiment of the present invention. Referring to FIG. 4, the thermoelectric converter 500 according to the present embodiment includes a case 510, a first electrode 530, a second electrode 540, a solid electrolyte 550, an actuating fluid 570, a heat source 590, and a transferring element 580. The transferring element 580 may include, for example, a wick, and may enable the actuating fluid 570 to flow between the first space 520a and the second space 520b via capillary action. That is, due to capillary action in a wick, the actuating fluid 570 may flow toward the first space 520a or the second space 520b.

FIGS. 6 and 7 are views of a thermoelectric converter 100 according to another embodiment of the present invention. FIG. 6 is a schematic perspective view of a thermoelectric converter 100, and FIG. 7 is a schematic cross-sectional view taken along a line IV-IV' of FIG. 6.

Referring to FIG. 6, the thermoelectric converter 100 includes a case 110, a first electrode 130, a second electrode 140, a solid electrolyte 150, an actuating fluid 170, and a heat source 190. Hereinafter, the differences between the thermoelectric converter according to the present embodiment illustrated in FIGS. 6 and 7 and the thermoelectric converter according to the previous embodiments illustrated in FIGS. 3 to 5 will be described in more detail. In FIGS. 3 to 7, elements represented by like terms perform like functions.

As illustrated in FIGS. 6 and 7, the first electrode 130, the second electrode 140, and the solid electrolyte 150 may each have an uneven surface C (see, e.g., FIG. 7) to increase their surface areas. In other words, as is more clearly shown in FIG. 7, the surface of the first electrode 130, the second electrode 140, and the solid electrolyte 150 is not flat, but rather, undulates up and down. The uneven surface C of the thermoelectric converter 100 illustrated in FIGS. 6 and 7 is merely exemplary, and the uneven surface may have various other suitable shapes. As shown in FIGS. 6 and 7, the first space 120a and the second space 120b may be formed to correspond to each other. However, the locations of the first space 120a and the second space 120b are not limited thereto. If surface areas of the first electrode 130, the second electrode 140, and the solid electrolyte 150 are increased as described above, a greater amount of the actuating fluid 170 passes through the solid electrolyte 150 per unit time and thus more electricity may be generated.

The present invention will be described in further detail with reference to the following examples. These examples are for illustrative purposes only and are not intended to limit the scope of the present invention.

**Examples**

Example 1 (Preparation of solid electrolyte)

1) Formation of β alumina substrate β alumina powder, DA-325 (DA-325 is an amine salt polyester phosphate sold under the trademark Disparlon® by Kusumoto Chemicals, Ltd., Japan) as a surfactant, and polyvinylalcohol (PVA) as a binder were mixed at a weight ratio of 99.45: 0.05: 0.5, and an appropriate amount of an isopropanol (IPA) as an organic solvent was added thereto to prepare a β alumina powder solution. The solution was uniformly mixed by using a ball mill for 24 hours. The type of organic solvent used is not particularly limited. For example, an alcohol may be used as the organic solvent so as to be quickly removed in a drying oven.

Then, the mixture was dried at a temperature of 150 ˚C for 5 hours in a drying oven, and subsequently formed into an appropriate shape by using a compression molding machine. In this case, 3 tons/cm$^2$ of pressure was applied.
Then, sintering was performed at a temperature of 1600 ˚C for 10 hours while the temperature was increased by 10 ˚C/min, thereby forming a β alumina substrate (e.g., the non-porous layer of the solid electrolyte).

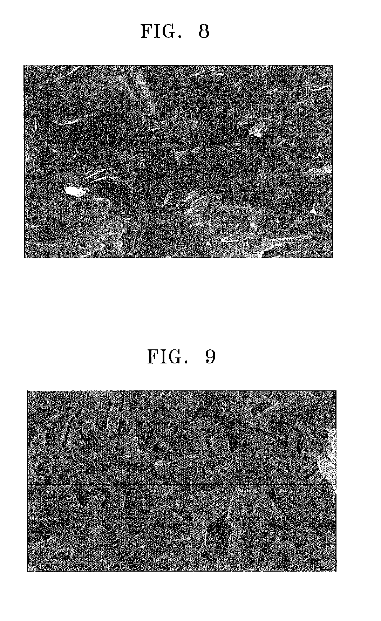

FIG. 8 is an enlarged view of the β alumina substrate of Example 1.

2) Preparation of porous β alumina slurry and formation of green sheet

β alumina powder, DA-325 (Disparlon®) as a surfactant, an acryl resin prepared by co-polymerizing 40 mol% of isobutyl methacrylate and 60 mol% of ethylhexyl methacrylate as a binder, and graphite as a pore forming agent at a weight ratio of 62:0.5:15:10 and an appropriate amount of diethylene glycol monobutyl ether as an organic solvent were mixed to prepare a porous β alumina slurry.
The slurry was coated on a polyethylene terephthalate film, and dried at a temperature of 150 ˚C for 25 minutes, thereby forming two green sheets.

3) Bonding of β alumina substrate and green sheet

The β alumina substrate of 1) and the green sheets of 2) were attached to each other so that the β alumina substrate was between the green sheets by layering them and heating them at a temperature of 110 ˚C under a pressure of 0.3 tons/cm$^2$ and a rate of 10 mm/sec using a laminator.

4) Sintering

Sintering was performed in a convection furnace, with the temperature being increased at a rate of 10 ˚C/min until the temperature reached 1400 ˚C. This temperature was maintained for 7 hours.

5) Coating of electrode particles

An interior of each of the green sheets was coated with TiN electrode particles by using a reactive magnetron for 65 minutes to sputter the particles on the porous layers of the sintered solid electrolyte. Thereby, a solid electrolyte is produced to have a structure of: electrode particle coated porous β alumina layer/non-porous β alumina layer/ electrode particle coated porous β alumina layer.
The density of the electrode particles after coating was measured by using the Archimedes method. The density of the first porous layer was 2.02 g/cm$^3$, and the density of the second porous layer was 2.01 g/cm$^3$.
FIG. 9 is an enlarged view of the surface of the β alumina layer coated with electrode particles according to Example 1.

Example 2 (Manufacturing of thermoelectric converter)

A thermoelectric converter having the structure illustrated in FIG. 3 was manufactured by using electrodes formed of TiN and the solid electrolyte prepared according to Example 1. A detailed manufacturing process for a thermoelectric converter would be apparent to those of ordinary skill in the art and thus will not be described in detail. Sodium was used as the actuating fluid.

Comparative Example 1

A thermoelectric converter was manufactured in the same manner as in Example 2, except that a non-porous β alumina substrate was used as a solid electrolyte instead of the solid electrolyte of Example 1. Just as in Example 2, sodium was used as the actuating fluid.

Evaluation Example

Outputs of the thermoelectric converters manufactured according to Example 2 and Comparative Example 1 were compared with each other and the results are shown in Table 1 below.

Table 1

| Solid electrolyte | | Comparative Example 1 | Example 2 |
|---|---|---|---|
| Operating Temperature 800 ˚C | V | 1.0 | 1.1 |
| | A/cm$^2$ | 0.8 | 1.0 |
| Power (W/cm$^2$) | | 0.8 | 1.1 |

Referring to Table 1, the thermoelectric converter of Example 2 generates more power than the thermoelectric converter of Comparative Example 1.

As described above, according to the one or more of the above embodiments of the present invention, an electrochemically active three phase boundary area is increased and thus the portion of the electrochemically utilized electrode materials is increased. Accordingly, a thermoelectric converter having the increased three phase boundary area has reduced costs when compared to conventional thermoelectric converters and additionally has high and improved performance.

Descriptions of features or aspects within each embodiment should typically be considered as available for other similar features or aspects in other embodiments. While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**Claims**

1.   A thermoelectric converter comprising:

a case having a first end and a second end;
an actuating fluid inside the case;
a solid electrolyte dividing an interior of the case, the solid electrolyte comprising a non-porous layer and a first porous layer on a first surface of the non-porous layer;
a first electrode;
a second electrode, the solid electrolyte being between the first electrode and the second electrode; and
a heat source for heating the first end or second end.

2.   The thermoelectric converter of claim 1, wherein the solid electrolyte further comprises a second porous layer on a second surface of the non-porous layer.

3.   The thermoelectric converter of claim 2, wherein each of the non-porous layer, the first porous layer, and the second porous layer comprises β alumina or β alumina.

4.   The thermoelectric converter of claim 2 or 3, wherein an interior of each of the first porous layer and the second porous layer is coated with electrode particles.

5.   The thermoelectric converter of claim 4, wherein the electrode particles are selected from the group consisting of TiN, TiC, RhW, Rh$_2$W, and mixtures thereof.

6.   The thermoelectric converter of any one of claims 2 to 5, wherein a thickness of each of the first porous layer and the second porous layer is about 0.05 mm to 3 mm, and/or wherein a density of each of the first porous layer and the second porous layer is about 1.0 g/cm$^3$ to about 3.0 g/cm$^3$.

7. The thermoelectric converter of claim 1, wherein each of the non-porous layer and the first porous layer comprises β alumina or β" alumina.

8. The thermoelectric converter of claim 1, wherein an interior of the first porous layer is coated with electrode particles.

9. The thermoelectric converter of claim 8, wherein the electrode particles are selected from the group consisting of TiN, TiC, RhW, $Rh_2W$, and mixtures thereof.

10. The thermoelectric converter of claim 1, wherein a thickness of the non-porous layer is about 0.1 mm to about 3 mm and/or wherein a thickness of the first porous layer is about 0.05 mm to 3 mm and/or wherein a density of the first porous layer is about 1.0 $g/cm^3$ to about 3.0 $g/cm^3$.

11. The thermoelectric converter of any one of the preceding claims, wherein the actuating fluid comprises an alkali metal, wherein the actuating fluid may comprise sodium.

12. The thermoelectric converter of any one of the preceding claims, further comprising a power generation unit, wherein the power generation unit is electrically connected to the first electrode and the second electrode.

13. A solid electrolyte for a thermoelectric converter comprising:

   a non-porous layer; and
   a first porous layer on a first surface of the non-porous layer.

14. The solid electrolyte of claim 13, further comprising a second porous layer on a second surface of the non-porous layer.

15. The solid electrolyte of claim 13 or 14, wherein an interior of the first porous layer is coated with electrode particles, wherein the electrode particles may be selected from the group consisting of TiN, TiC, RhW, $Rh_2W$, and mixtures thereof.

FIG. 1A

porous layer

non-porous layer

FIG. 1B

porous layer

non-porous layer

porous layer

FIG. 2

electrode particle

porous layer coated with electrode particles in the interiors

non-porous layer

FIG. 3

FIG. 4

FIG. 5

FIG. 6

FIG. 7

FIG. 8

FIG. 9